# EUROPEAN PATENT APPLICATION

(11) **EP 3 712 556 A1**
(43) Date of publication of application: **23.09.2020**
(21) Application number: 20163262.7
(22) Date of filing: 16.03.2020
(51) Int. Cl.: G01C 3/14, B60R 1/00, G01C 25/00, G01S 7/497, G01S 13/88, G01S 17/89, G06K 9/00, G06T 7/80, G01S 13/931, G01S 17/88, G01S 17/931

(54) **SENSOR VERIFICATION**

(30) Priority: 20.03.2019 US 201916359410
(71) Applicant: Zenuity AB, 417 56 Göteborg (SE)
(72) Inventor: DEMERLY, Jon D., Byron, MI 48418 (US); BROWN, Ryan, Royal Oak, MI 48067 (US); BEELER, Mark, LaSalle, Ontario N9J3R7 (CA); REILLY, Kaice, Detroit, MI 48207 (US); POPLAWSKI, James, Canton, MI 48188 (US)
(74) Representative: Zacco Sweden AB

(57) **Abstract**

A method (100) for performing a sensor verification for a vehicle (1) is disclosed. The vehicle comprises a first sensor (2) and a second sensor (3), wherein a first sensor coordinate system of the first sensor and a second sensor coordinate system of the second sensor are related to a vehicle coordinate system, and wherein the first sensor and the second sensor have an at least partly overlapping observable space. The method (100) comprises determining (101) a first position of an external object located in the at least partly overlapping observable space by means of the first sensor of the vehicle, and determining (102) a second position of the external object by means of the second sensor of the vehicle. Further, the method comprises comparing (103) the determined first position and the determined second position in relation to any one of the first sensor coordinate system, second sensor coordinate system or vehicle coordinate system in order to form a first comparison value. Still further, the method comprises determining (104) a reference position of at least one reference feature by means of the first sensor, wherein each reference feature is arranged on the vehicle at a predefined position relative to the first sensor, each reference feature being further arranged in an observable space of the first sensor, and comparing (105) each determined reference position with each corresponding predefined position in order to form a verification comparison value. Then, the method comprises generating (106) an output signal indicative of an operational status of the second sensor based on either one or both of the first comparison value and the verification comparison value, and further based on at least one predefined threshold value.

## Description

### TECHNICAL FIELD

The present disclosure relates to methods and systems for sensor verification, and in particular to sensor verification of sensors provided on road vehicles.

### BACKGROUND ART

Development of solutions for autonomous vehicles has a large focus and many different technical areas are being developed. Today, development is ongoing in both autonomous driving (AD) and advanced driver-assistance systems (ADAS) for different levels of driving assistance. As the vehicles become more and more autonomous, safety aspects increase in importance to reduce the risk of accidents and damage to both the vehicle and objects and humans located in the surrounding areas. These types of vehicles have a number of sensors located on the vehicle to detect the surrounding areas (halo) and determining distance to and location of objects, other vehicles movement, position, speed, and yaw of ego-vehicle and other vehicles, and from all these data determine safe route for the ego-vehicle towards a set destination.

Many times multiple sensors are used to sense objects in different regions around the vehicle, and the data from a plurality of sensors are sent to a control circuit that analyses the data for navigation, collision avoidance, identification, etc. For obvious reasons, it is of crucial importance that all sensors are functional and accurate. In particular for autonomous and semi-autonomous vehicle, which rely on the accuracy of their sensors to a large extent. In many cases the functionality of the sensors is verified manually at dedicated locations (e.g. during maintenance of the vehicle), which can be time consuming and complicated. Moreover, since these services are only performed periodically, it is impossible to know if the functionality of a sensor is impaired during these service intervals.

Thus, there is a need for a new solution which allows for efficient verification of the functionality of one or more sensors provided in a vehicle. In particular, there is a need for an automated sensor verification solution which can be performed "in the field".

### SUMMARY

It is therefore an object of the present disclosure to provide a method for performing a sensor verification for a vehicle, a non-transitory computer-readable storage medium, a vehicle control system, and a vehicle which alleviate all or at least some of the drawbacks of presently known systems.

In more detail, it is an object of the present disclosure to provide a sensor verification method for autonomous or semi-autonomous road vehicles which can be performed "in the field", i.e. to alleviate the need for having specialized equipment or having to transport the vehicle to a dedicated service location in order to ensure that the sensors of the vehicle's perception system are operating correctly.

This/These object(s) is/are achieved by means of a method, a non-transitory computer-readable storage medium, a vehicle control system, and a vehicle, as defined in the appended claims. The term exemplary is in the present context to be understood as serving as an instance, example or illustration.

According to a first aspect of the present disclosure, there is provided a method for performing a sensor verification for a vehicle. The vehicle comprises a first sensor and a second sensor. A first sensor coordinate system (i.e. a local coordinate system of the first sensor) and a second sensor coordinate system of the second sensor (i.e. a local coordinate system of the second sensor) are related to a vehicle coordinate system. Moreover, the first sensor and the second sensor have an at least partly overlapping observable space. The method comprises determining a first position of an external object located in the at least partly overlapping observable space by means of the first sensor of the vehicle, and determining a second position of the external object by means of the second sensor of the vehicle. Further, the method comprises comparing the determined first position and the determined second position in relation to any one of the first sensor coordinate system, second sensor coordinate system or vehicle coordinate system in order to form a first comparison value. Still further, the method comprises determining a reference position of at least one reference feature by means of the first sensor, wherein each reference feature is arranged on the vehicle at a predefined position relative to the first sensor, each reference feature being further arranged in an observable space of the first sensor, and comparing each determined reference position with each corresponding predefined position in order to form at least one verification comparison value. Then, the method comprises generating an output signal indicative of an operational status of the second sensor based on either one or both of the first comparison value and the at least one verification comparison value, and further based on at least one predefined threshold value.

Hereby presenting a simple and efficient method for verifying an operational status of one or more sensors of a vehicle perception system, which can be performed in-the-field, and accordingly reduce the risk of erroneous detection of obstacles during navigation of the vehicle.

The present inventions is at least partly based on the realization that with the increasing performance requirements for vehicle perception systems, and in particular on the functionality of the vehicle's active sensors (such as RADARs, LIDARs, and such), there is a need for a new method for verifying the accuracy or operational status of these sensors. In particular, the present inventors realized that it is possible to use one dedicated sensor together with one or more fiducial features arranged within that sensor's field of view to verify the operational status of other sensors of the vehicle (which are critical for a plurality of functions of the vehicle). Thus, by means of the proposed method it is possible to provide a simple and cost effective means which need no significant reconstructions or reconfigurations of existing systems.

Further, in accordance with an exemplary embodiment of the present disclosure, the step of comparing the determined first position and the determined second position comprises determining a confirmation position of the external object by transforming the determined second position to the first sensor coordinate system. Then, the method comprises reconfiguring the first sensor based on a comparison between the determined first position and the determined confirmation position such that the external object appears to be in the confirmation position for the first sensor, such that the step of determining the reference position comprises determining the reference position of at least one reference feature by means of the reconfigured first sensor. Accordingly, the step of generating an output signal indicative of an operational status of the second sensor is based on the at least one verification comparison value and a maximum threshold value between the determined reference position and the predefined position. In short, in this exemplary embodiment, the first sensor, at least temporarily, assumes a configuration setup indicative of the second sensor, and then performs a measurement check against the known reference features in order to conclude if the second sensor is working properly or not.

Still further, in accordance with another exemplary embodiment of the present disclosure, the step of comparing each determined reference position with each corresponding predefined position in order to form at least one verification comparison value comprises verifying an operational status of the first sensor based on the at least one verification comparison value and a maximum threshold value between the determined reference position and the predefined position. Moreover, the step of determining the first position of the external object comprises determining the first position of the external object by means of the verified first sensor, and the step of generating an output signal is based on the first comparison value and a maximum threshold difference between the first position and the second position. Here, the comparison between the measurements is made once the operational status of the first sensor has been verified. Thus, once the accuracy of the first sensor is ensured, the comparisons between measurements of the first and second sensors can be used to directly verify the operational status of the second sensor.

Yet further, in accordance with another embodiment of the present disclosure, the step of determining a reference position of at least one reference feature by means of the first sensor comprises determining a reference position for a plurality of reference features by means of the first sensor. Thus, the method further comprises calibrating the first sensor based on the at least one verification comparison value, and the step of determining the first position of the external object comprises determining the first position of the external object by means of the calibrated first sensor. Further, the step of generating an output signal is based on the first comparison value and a maximum threshold difference between the first position and the second position. Here, multiple reference features (may also be referred to as fiducial features) are used to calibrate the first sensor, whereby the subsequent comparison between the two measurements from the first and second sensors can be used to directly verify an operational status of the second sensor.

According to a second aspect of the present disclosure, there is provided a non-transitory computer-readable storage medium storing one or more programs configured to be executed by one or more processors of a vehicle control system, the one or more programs comprising instructions for performing the method according to any one of the embodiments disclosed herein. With this aspect of the disclosure, similar advantages and preferred features are present as in the previously discussed first aspect of the disclosure.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the present disclosure, there is provided a vehicle control device comprising at least one processor configured to execute instructions stored in the memory to perform a method for performing a sensor verification for a vehicle comprising a first sensor and a second sensor, wherein a first sensor coordinate system of the first sensor and a second sensor coordinate system of the second sensor are related to a vehicle coordinate system, and wherein the first sensor and the second sensor have an at least partly overlapping observable space. Accordingly, the at least one processor is configured to determine a first position of an external object located in the at least partly overlapping observable space by receiving a first signal indicative of the first position, from the first sensor, determine a second position of the external object by receiving a second signal indicative of the second position, from the first sensor, compare the determined first position and the determined second position in relation to any one of the first sensor coordinate system, second sensor coordinate system or vehicle coordinate system in order to form a first comparison value. Further, the at least one processor is configured to determine a reference position of at least one reference feature by receiving a reference signal indicative of the reference position from the first sensor and, wherein each reference feature is arranged at a predefined position on the vehicle in an observable space of the first sensor, compare each determined reference position with the predefined position in order to form at least one verification comparison value, and send an output signal indicative of an operational status of the second sensor based on at least one of the first comparison value and the at least one verification comparison value, and further based on at least one predefined difference threshold value. With this aspect of the disclosure, similar advantages and preferred features are present as in the previously discussed first aspect of the disclosure.

Further, according to a fourth aspect of the present disclosure, there is provided a vehicle comprising a first sensor for detecting position of an external object relative to the first sensor, a second sensor for detecting a position of the external object relative to the second sensor, wherein the first sensor and the second sensor have an at least partly overlapping observable space, at least one reference feature arranged on the vehicle at a predefined position relative to the first sensor, each reference feature being further arranged in an observable space of the first sensor, and a vehicle control device according to any one of the embodiments disclosed herein. With this aspect of the disclosure, similar advantages and preferred features are present as in the previously discussed first aspect of the disclosure.

Further embodiments of the disclosure are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present disclosure will in the following be further clarified with reference to the embodiments described hereinafter.

### BRIEF DESCRIPTION OF THE DRAWINGS

Further objects, features and advantages of embodiments of the disclosure will appear from the following detailed description, reference being made to the accompanying drawings, in which:
Fig. 1 is a flow chart representation of a method for performing a sensor verification for a vehicle according to an embodiment of the present disclosure.
Fig. 2 is a flow chart representation of a method for performing a sensor verification for a vehicle according to an embodiment of the present disclosure.
Fig. 3 is a flow chart representation of a method for performing a sensor verification for a vehicle according to an embodiment of the present disclosure.
Fig. 4 is a flow chart representation of a method for performing a sensor verification for a vehicle according to an embodiment of the present disclosure.
Fig. 5 is a schematic bottom view illustration of a vehicle comprising a vehicle control device according to an embodiment of the present disclosure.
Fig. 6 is a schematic side view illustration of a vehicle comprising a vehicle control device according an embodiment of the present disclosure.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or analogous components. Also, even though the exemplary methods discussed in the following show a specific order of steps, the skilled reader realizes that some of the steps may be performed in a different order or simultaneously unless otherwise explicitly stated.

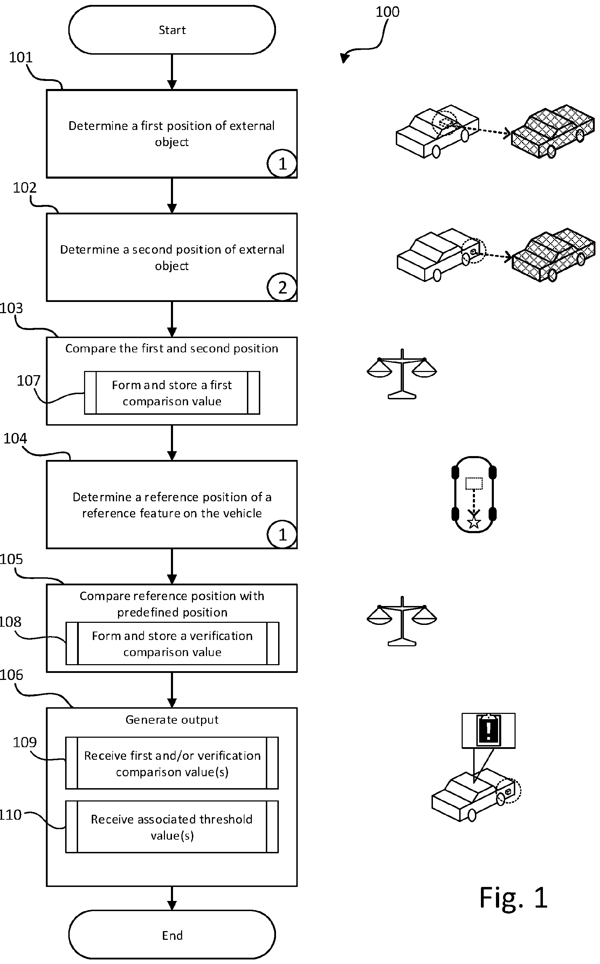

Fig. 1 is a schematic flow chart illustration of a method 100 for performing a sensor verification for a vehicle according to an embodiment of the present disclosure. The vehicle has at least a first sensor and a second sensor, where a first sensor coordinate system (i.e. the local coordinate system of the first sensor) and a second sensor coordinate system (i.e. the local coordinate system of the second sensor) are related to a vehicle coordinate system (i.e. the local coordinate system of the vehicle. The vehicle coordinate system conventionally originates from a centre point of a rear axle or the front axle of the vehicle. Moreover, the first sensor and the second sensor have an at least partly overlapping observable space (may also be referred to as a viewing frustum, observable area, field of view, etc.). Preferably, the first sensor has an at least partly overlapping observable space with a plurality of sensors of the vehicle.

The first sensor may be understood as a "reference sensor" or a "truth sensor" while the second sensor may be any other sensor of the vehicle that is part of a "sensor halo" of a perception system of the vehicle. For example, the first and second sensors may be in the form of active sensors (such as e.g. radar sensors, LIDAR sensors, sonar sensors, etc.). In more detail, the first sensor, and optionally the second sensor, can be active sensors configured to send a first electromagnetic wave towards a target and receive a second electromagnetic wave, where the second electromagnetic wave is the first wave that has been reflected off the target. However, in other embodiments the first sensor and the second sensor may be passive sensors, such as e.g. cameras, where an estimation of position can be performed by suitable software operating based on the data received from the passive sensors. However, in other example realizations the first sensor and/or the second sensor is a stereo camera.

The method 100 is suitable for performing a sensor verification for a road vehicle such as e.g. a car, a bus or a truck "on the go", and especially for autonomous or semi-autonomous vehicles. In more detail, the method 100 is particularly suitable for performing a sensor verification for systems which experience dynamic conditions requiring a robust and constantly-updating sensor verification.

The method 100 comprises determining 101 a first position of an external object by means of the first sensor, here the external object is illustrated in the form of another vehicle in the schematic illustrations to right of the of the flow chart boxes. The positions may for example be denoted as "pos" and include a set of spatial coordinates (x, y, z) and an orientation (yaw, pitch, roll). Thus, the first position can be denoted as Posi = (X₁, Y₁, Z₁, Yaw₁, Pitch₁, Roll₁). The external object is located in the at least partly overlapping observable space of the two sensors. The number in the circle in the bottom right corner of the flow chart boxes 101, 102, 104 serves to indicate which sensor is used to execute a method step. Further, the method 100 comprises determining 102 a second position (Pos₂ = (X₂, Y₂, Z₂, Yaw₂, Pitch₂, Roll₂)) of the external object by means of the second sensor of the vehicle.

Further, the determined first position and the determined second position are compared 103 in order to form 108 a first comparison value (Posi - Pos₂). Moreover, the comparison 103 is performed in a common single coordinate system; typically, the vehicle coordinate system, or generally in any relatable coordinate system. Thus, the step of comparing 103 the sensor information may include any suitable coordinate transformation to a common coordinate system. The first comparison value is also stored 108 in e.g. a memory associated with the vehicle (local or remote).

Next, a reference position (Pos_{F} = (X_{F}, Y_{F}, Z_{F}, Yaw_{F}, Pitch_{F}, Roll_{F})) of at least one reference feature (may also be referred to as a fiducial feature) is determined 104 by means of the first sensor. Each reference feature is arranged on the vehicle at a predefined position relative to the first sensor, and in the observable space of the first sensor. In other words, the position of the one or more reference features is "known" in relation to the first sensor. Thus, when determining 104 the position of a reference feature there is a ground truth value (Pos_{Truth} = (X_{Truth}, Y_{Truth}, Z_{Truth}, Yaw_{Truth}, Pitch_{Truth}, Roll_{Truth})) that is expected to be the resulting output if the first sensor is properly calibrated. Accordingly, each sensor-determined reference position is compared 105 with a corresponding predefined position (Pos_{Truth} = (XTruth, YTruth, ZTruth, YawTruth, PitchTruth, Roll_{Truth})) in order to form and store 108 at least one verification comparison value (Pos_{F} - Pos_{Truth}), this can e.g. be one value per reference feature or an aggregated factor. Stated differently, this step of comparing 105 the reference position(s) with the predefined position(s) can generally be referred to as a verification of the functionality of the first sensor.

Further, the method 100 comprises generating 106 an output signal indicative of the operational status of the second sensor based on either the first comparison value, the verification comparison value or both, as well as, at least one predefined threshold value. Dependent on the application, and desired configuration, either one or both of the comparison values may form a direct basis for the output, as will be exemplified in the following. The step of generating 106 the output signal may comprise sending a signal to a user interface of the vehicle, the signal comprising information about an operational status of the second sensor. Moreover, if the second sensor turns out to be faulty the user/system may be advised/prompted to turn the second sensor off in order to avoid erroneous detections/measurements from that sensor, possibly during subsequent navigation of the vehicle.

Moreover, the first sensor is preferably arranged on an undercarriage of the vehicle since the undercarriage is particularly suitable for providing one or more reference points without impairing any aesthetical aspects of the vehicle. Moreover, by providing the first sensor on the undercarriage of the vehicle it is possible to arrange the first sensor to have a 360 degree observable space or viewing frustum, and thereby have an overlapping observable space with most, if not all, applicable sensors provided on the vehicle. The 360 degrees are around a vertical axis, generally perpendicular to a ground surface. The 360 degree observable space may be realized by utilizing a plurality of "sensor units" having sequentially overlapping observable spaces and thereby together forming the "first sensor".

Naturally, the vehicle will comprise other sensors (pressure sensors, current sensors, etc.) that will not have an "observable space", and particularly not an observable space that overlaps with the one of the first sensor. However, as the skilled person realizes, such sensors are not referred to in this disclosure, instead one may consider the sensors as discussed herein to be part of a "perception system" of the vehicle, i.e. sensors configured to detect the presence or absence of obstacles in the surrounding area of the vehicle.

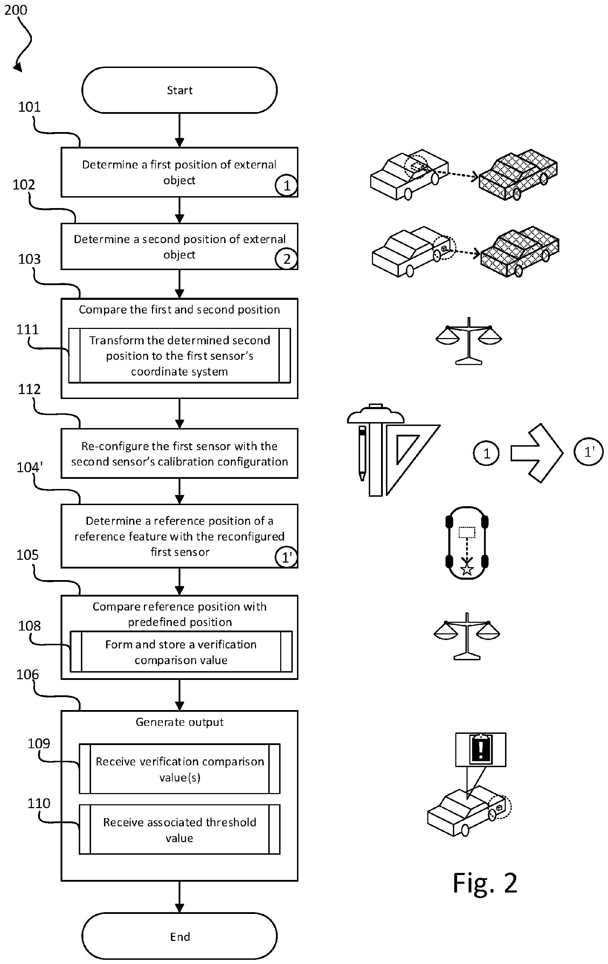

In Figs. 2 - 4, some of the method steps are the same (denoted by the same reference numerals) as in the previously discussed embodiment with reference to Fig. 1. Accordingly, for the sake of brevity and conciseness, detailed elaboration in reference to those steps will be omitted in the following.

Fig. 2 is a schematic flow chart illustration of a method 200 for performing a sensor verification for a vehicle comprising a first and a second sensor. The method 200 comprises determining 101 a first position of an external object by means of a first sensor, and determining 102 a second position of the same external object by means of a second sensor.

Further, the determined 101 first position and the determined 102 second position are compared 103 to each other. More specifically, the comparison 103 comprises transforming 111 the determined second position to the first sensor's coordinate system. Thus, now there are two independent measurement points within the first sensor's coordinate system, and the measurement point related to the second position can be construed or referred to as a confirmation position. Then, the first sensor is re-configured 112 based on a comparison between the first position and the determined confirmation position. In more detail, the first sensor is temporarily re-configured such that the external object appears to be in the confirmation position as detected by the second sensor. Stated differently, the first sensor is re-configured with the second sensor's calibration data or configuration data.

Moving on, a reference position of one or more reference features is determined 104' with the re-configured first sensor, and a verification comparison value is formed and stored 108 based on each determined reference position and the known position of each reference feature. In other words, the first sensor performs a check or verification of the second sensor's calibration/configuration data by performing measurements on the "known" reference point(s) provided on the vehicle. Next, an output signal is generated 106 based on the received 109 verification comparison value(s) and the received 110 associated threshold value(s). The output may be any form of suitable output (visual, tactile, audio, alone or in combination) to inform the user of an operational status of the second sensor. The user may further be prompted to perform an "in-the-field" calibration of the second sensor, or to turn off the second sensor if the operational status indicates that the second sensor is faulty.

In summary, Fig. 2 describes an exemplary embodiment, where two independent measurement are made on the same external object in the surrounding area of the vehicle (e.g. other vehicle, curb, traffic sign, etc.), and the first sensor is re-configured based on the measurement of the second sensor in order to verify that measurement by performing a check against one or more reference features.

In an illustrative example, one can envision that a sensor halo of the vehicle sees a curb and measures the location, in the vehicle coordinate system, of that curb. The first sensor (under the car (UTC) sensor) also sees the same curb and "adjusts itself" (calibrates) so that the curb is in the same location as indicated by the sensor halo. With that set of calibration parameters, the UTC sensor checks the location of the predefined and "known" reference features of the vehicle. If the measured positions of the reference feature(s) agree with the known (from the factory) location(s) then the sensor halo check is "OK". If it doesn't match the known location for that reference feature then the sensor halo may need to be calibrated. A sensor halo can be understood as the plurality of sensors of a vehicle perceptions system whose combined observable space encloses the vehicle (i.e. forms a "halo" around the vehicle).

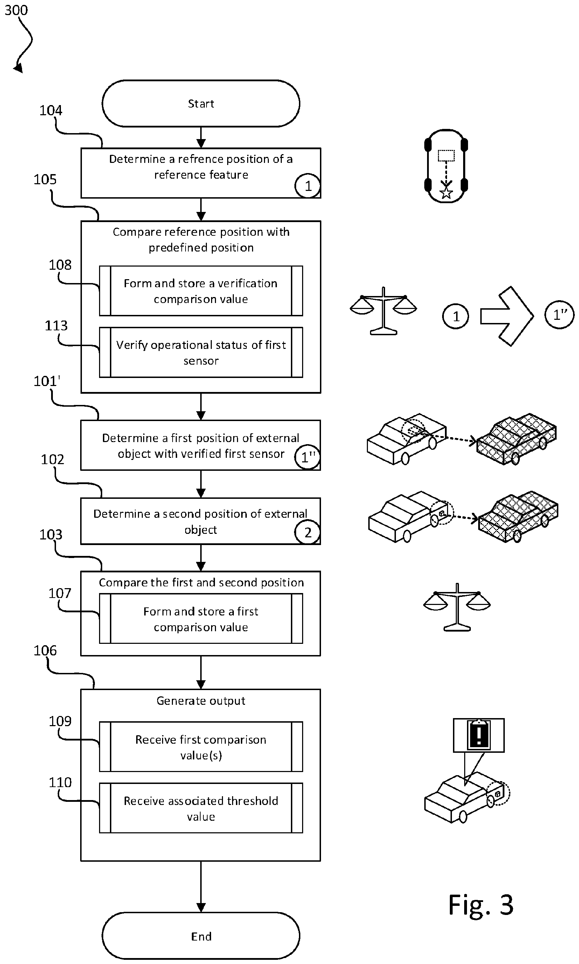

Further, Fig. 3 is a schematic flow chart illustration of a method 300 for performing a sensor verification for a vehicle comprising a first sensor and a second sensor, according to another exemplary embodiment of the present disclosure. As in the previously discussed embodiments, the first sensor coordinate system, the second sensor coordinate system are related to a vehicle coordinate system. Also, the first and second sensors have an at least partly overlapping observable space. The method 300 comprises determining 104 a reference position of one or more reference features provided on the vehicle using the first sensor. Each reference feature is arranged at a predefined position on the vehicle in relation to the first sensor.

Even further, the step of comparing 105 each determined reference position with each corresponding predefined position in order to form 108 (and store) a verification comparison value comprises verifying 113 an operational status based on the verification comparison value and a maximum threshold value between the determined reference position and the predefined position. In other words, the configuration of the first sensor is checked against the "known" reference features (may also be referred to as fiducial features), whereby the operational status of the first sensor can be verified 113.

Next, a first position of an external object is determined 101' by means of the verified first sensor, and a second position of the same external object is determined 102 by means of a second sensor. The first and second determined positions are then compared 103 to each other. The comparison 103 is made in reference to a common coordinate system, wherefore this step may include one or more coordinate transformations for either one or both of the measurements. A first comparison value is formed 107 (and stored) based on the comparison 103.

Further, the method 300 comprises generating 106 an output signal indicative of an operational status of the second sensor based on the first comparison value and a maximum threshold value associated with the first comparison value. Thus, prior to generating an output, the method may include receiving 109 the first comparison value and receiving 110 the associated threshold value. Stated differently, the output is generated 106 based on the determined first and second positions and a maximum threshold difference between them. Because the first position is measured by means of a verified sensor, it is assumed that this is the "true" position of the external object, and if the determined second position (i.e. the measurement performed by the second sensor) deviates too much from the "true" position, it can be concluded that the second sensor is faulty.

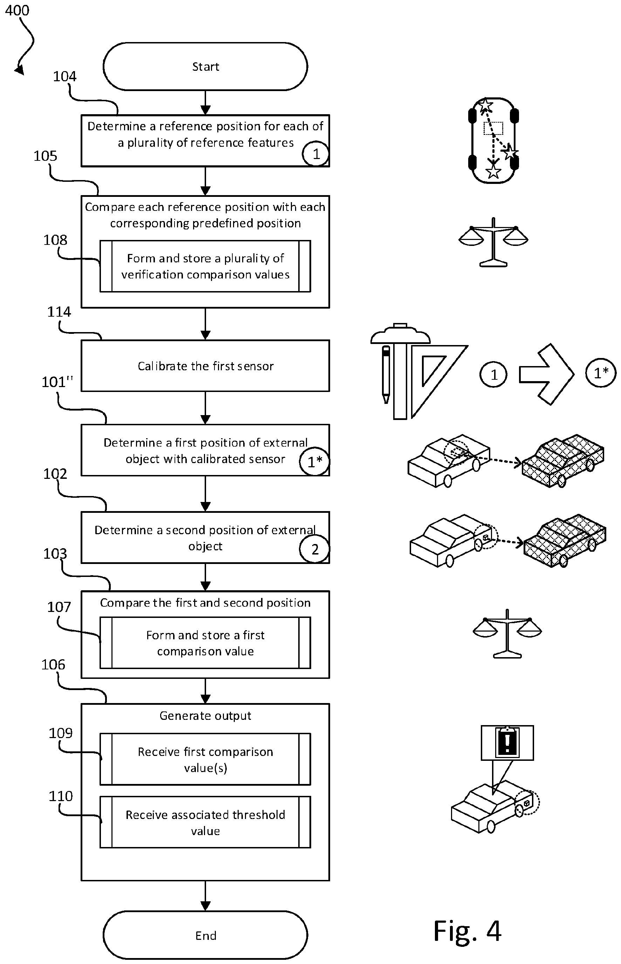

Fig. 4 is another schematic flow chart illustration of a method 400 for verifying an operational status of a sensor for a vehicle. The method 100 comprises determining 104 a reference position for each of a plurality of reference features using a first sensor. As in previously discussed embodiments, the reference features have predefined and "known" (from the factory) positions in relation to the first sensor. Each sensor-determined reference position is subsequently compared 105 with each corresponding predefined position, in order to form 108 (and store) a plurality of verification comparison values. Then, the first sensor is calibrated based on the verification comparison value(s). Multiple reference features will allow for increased reliability and repeatability, even if one is damaged or obscured.

Further, the first sensor is used to make a first measurement of a position of an external object. In other words, the method includes determining 101" a first position of an external object by means of the calibrated first sensor. A second sensor is used to determine 102 a second position of the same external object. These measurements are then compared 103 and a first comparison value is formed 107. The comparison may be performed in any suitable common coordinate system, thus the comparison may be preceded by one or more coordinate-transformations of the measurements.

The method 100 further comprises generating 106 an output signal based on the received 109 first comparison value and a received 110 maximum threshold difference between the determined 101" first position and the determined 102 second position. In other words, the determined 101" first position is assumed as a ground truth and the determined 102 second position is then compared to the ground truth whereby the functionality of the second sensor can be verified.

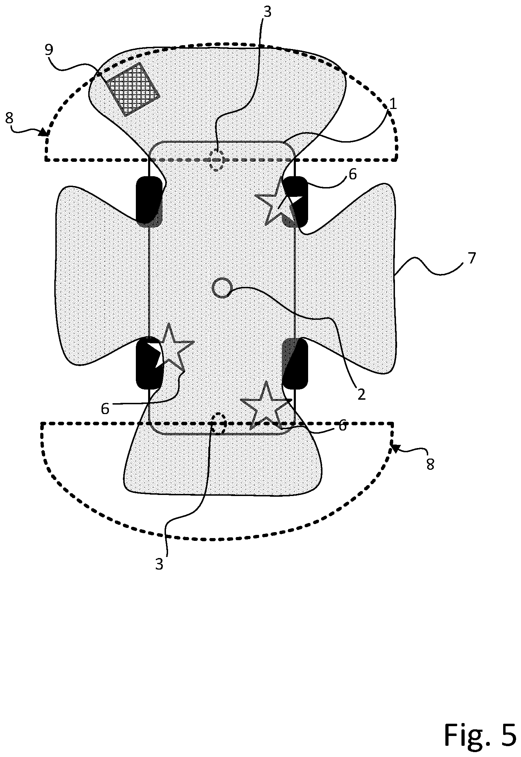

Fig. 5 is a schematic bottom view of a vehicle 1 comprising a first sensor 2 and two second sensors 3 (e.g. bumper sensors), wherein a first sensor coordinate system and a second sensor coordinate are related to a vehicle coordinate system, and wherein the first sensor 2 and the second sensors 3 have an at least partly overlapping observable space. The observable space of the first sensor 2 is indicated by the patterned area 7, and the observable space of each second sensor 3 is indicated by the area 8 within the dashed lines originating from each of the second sensors 3.

In Fig. 5, an external object 9 is arranged in a surrounding area of the vehicle 1, and in more detail the external object is located in an overlapping observable space of the first sensor 2 and one of second sensors 3. The external object may for example be a portion of a road barrier, a lamp post, a curb, or any other static object forming an obstacle for the vehicle. Since the actual functionality of the sensor arrangement has been discussed in detail in the foregoing, the verification process will not be repeated, but is considered to be readily understood by the skilled reader.

The first sensor (i.e. "truth sensor") 2 is arranged on a central portion on the undercarriage of the vehicle 1. The first sensor 2 may however have alternative placements on the vehicle 1, such as for example on the roof of the vehicle, where a vehicle antenna (e.g. in the form of a fin) can act as a reference feature. Alternatively, the first sensor 2 can be an A-frame mounted sensor in the form a fisheye camera that can simultaneously "see" the front turn signal and the rear turn signal in addition to a pattern on a stationary portion of the vehicle (e.g. a foot railing). Another example would be to provide the first sensor within the windscreen of the car, where specific features of the hood of the car can be used as reference features. However, by having the first sensor 2 on the undercarriage of the vehicle 1, multiple reference features can be provided without impairing the aesthetics of the vehicle, and already existing features can be used (e.g. wheels, suspensions, etc.).

The vehicle 1 is furthermore provided with a plurality of reference features 6, the reference features can be specialized calibration points and/or simple known characteristic of the vehicle's known form factor. Having multiple reference features 6 allows for reliability and repeatability, even if one reference feature 6 is damaged or obscured. The reference features may for example be in the form of spheres (symmetric from all angles). The reference features may furthermore be covered with specialized coating in order to facilitate measurements and improve accuracy of the reference measurements.

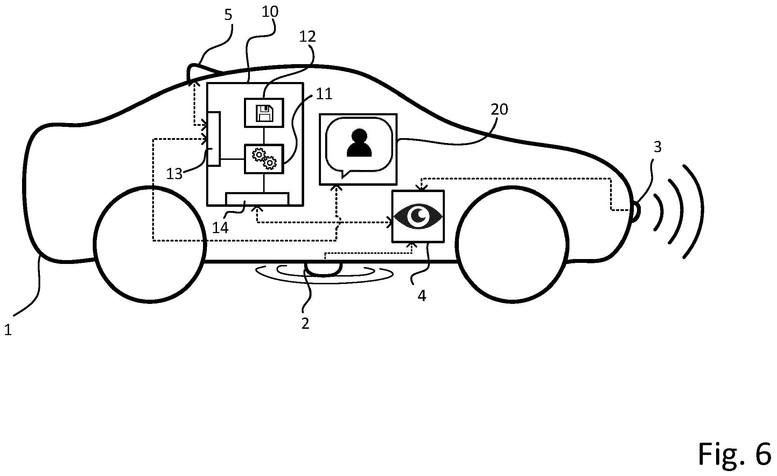

Fig. 6 is a schematic illustration of a vehicle 1 comprising a vehicle control device 10. The vehicle control device comprises a processor (may also be referred to as a control circuit) 11, a memory 12, a sensor interface 14, and a communication interface 13. The processor 11 is configured to execute instructions stored in the memory 12 to perform a method for performing a sensor verification for a vehicle 1 according to any of the embodiments discussed herein.

Further, the vehicle 1 has a first sensor 2 for detecting position of an external object relative to the first sensor. The first sensor 2 is here arranged on an undercarriage of the vehicle 1. The vehicle 1 further has a second sensor 3 for detecting a position of the external object relative to the second sensor 3, wherein the first sensor 2 and the second sensor 3 have an at least partly overlapping observable space. Moreover, the vehicle has at least one reference feature (see e.g. ref. 6 in Fig. 5) arranged on the vehicle at a predefined position relative to the first sensor 2, and within the observable space of the first sensor 2.

In more detail, the processor 11 is configured to determine a first position of an external object (not shown) located in the at least partly overlapping observable space by receiving a signal indicative of the first position from the first sensor 2. The processor 11 is further configured to determine a second position of the external object by receiving a second signal indicative of the second position from the second sensor 3. The signals may be provided, via the sensor interface 14, from a perception system 4 of the vehicle to which each sensor 2, 3 is connected. Naturally, the perception system 4 of the vehicle may comprise a plurality of sensors (short range radar, long range radar, LIDAR, etc.) configured for various tasks where the combined observable area can be said to form a "sensor halo" surrounding the vehicle. The various tasks may for example be park assist, cross traffic alert, blind spot detection, adaptive cruise control, and so forth.

Further, the processor 11 is configured to compare the determined first position with the determined second position in relation to any suitable coordinate system, in order to form a first comparison value. Then, a reference position of at least one reference feature is determined by the processor 11 by using the first sensor 2. In more detail, the reference position is determined by receiving a reference signal indicative of the reference position from the first sensor 2. Each reference feature is arranged at a predefined position on the vehicle. The processor 11 is further configured to compare each determined reference position with each corresponding predefined position in order to form a verification comparison value.

Still further, the processor 11 is configured to send an output signal (e.g. via the communication interface 13) indicative of an operational status of the second sensor. The output may be sent to a user interface (e.g. infotainment system) 20 in order to inform a user that a sensor may be malfunctioning. Moreover, the processor 11 may be configured to determine the operational status of the sensor and shut down/turn off the second sensor if it is determined that the sensor is malfunctioning (making inaccurate measurements), and optionally, generate an output to a user interface to indicate that the vehicle 1 should be taken to a repair shop. Thereby, accuracy of the sensor halo of the vehicle can easily be verified and the overall road safety can accordingly be improved.

It should be appreciated that the sensor interface 14 may also provide the possibility to acquire sensor data directly or via dedicated sensor control circuitry 4 in the vehicle. The communication/antenna interface 13 may further provide the possibility to send output to a remote location (e.g. remote operator or control centre) by means of the antenna 5. Moreover, some sensors in the vehicle may communicate with the control device 10 using a local network setup, such as CAN bus, l2C, Ethernet, optical fibres, and so on. The communication interface 13 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

In summary, the present disclosure provides for a new and improved fully automated sensor verification system, which can be performed "in-the-field" or "on-the-go", thereby alleviating the need for immediately taking the vehicle to dedicated service points. Moreover, the proposed method and control device allows for continuously ensuring the operational accuracy of the vehicle sensors, consequently improving the overall safety of the vehicle. More specifically, the present disclosure alleviates the problem of current systems where miscalibrations or malfunctioning sensors are generally not discovered until the vehicle undergoes a regular service, wherefore there is an increased risk of accidents in between these periods should one of the sensors be faulty.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

The processor(s) or control circuit(s) (associated with the vehicle control system) may be or include any number of hardware components for conducting data or signal processing or for executing computer code stored in memory. The control circuit may for example be a microprocessor, digital signal processor, graphical processing unit (GPU), embedded processor, field programmable gate array (FPGA), or ASIC (Application specific integrated circuit).

As discussed in the foregoing the systems have an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes/methods described herein.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

Even though the foregoing description has mainly been made in reference to vehicles in the form of cars, the disclosure is also applicable in other road vehicles such as busses, trucks, etc.

Exemplary methods, computer-readable storage media, vehicle control devices, and vehicles are set out in the following items:
1. A method for performing a sensor verification for a vehicle comprising a first sensor and a second sensor, wherein a first sensor coordinate system of the first sensor and a second sensor coordinate system of the second sensor are related to a vehicle coordinate system, and wherein the first sensor and the second sensor have an at least partly overlapping observable space, the method comprising:
   determining a first position of an external object located in the at least partly overlapping observable space by means of the first sensor of the vehicle;
   determining a second position of the external object by means of the second sensor of the vehicle,
   comparing the determined first position and the determined second position in relation to any one of the first sensor coordinate system, second sensor coordinate system or vehicle coordinate system in order to form a first comparison value;
   determining a reference position of at least one reference feature by means of the first sensor, wherein each reference feature is arranged on the vehicle at a predefined position relative to the first sensor, each reference feature being further arranged in an observable space of the first sensor;
   comparing each determined reference position with each corresponding predefined position in order to form at least one verification comparison value;
   generating an output signal indicative of an operational status of the second sensor based on at least one of the first comparison value and the verification comparison value, and further based on at least one predefined threshold value.
2. The method according to item 1, wherein the step of comparing the determined first position and the determined second position comprises determining a confirmation position of the external object by transforming the determined second position to the first sensor coordinate system;
   reconfiguring the first sensor based on a comparison between the first position and the determined confirmation position such that the external object appears to be in the confirmation position for the first sensor;
   wherein the step of determining the reference position comprises determining the reference position of at least one reference feature by means of the reconfigured first sensor;
   wherein the step of generating an output signal indicative of an operational status of the second sensor is based on the at least one verification comparison value and a maximum threshold value between the determined reference position and the predefined position.
3. The method according to item 1, wherein the step of comparing each determined reference position with each corresponding predefined position in order to form at least one verification comparison value comprises verifying an operational status of the first sensor based on the at least one verification comparison value and a maximum threshold value between the determined reference position and the predefined position;
   wherein the step of determining the first position of the external object comprises determining the first position of the external object by means of the verified first sensor;
   wherein the step of generating an output signal is based on the first comparison value and a maximum threshold difference between the first position and the second position.
4. The method according to item 1, wherein the step of determining a reference position of at least one reference feature by means of the first sensor comprises determining a reference position for a plurality of reference features by means of the first sensor, the method further comprising:
   calibrating the first sensor based on the at least one verification comparison value;
   wherein the step of determining the first position of the external object comprises determining the first position of the external object by means of the calibrated first sensor; and
   wherein the step of generating an output signal is based on the first comparison value and a maximum threshold difference between the first position and the second position.
5. The method according to any one of the preceding items, wherein the first sensor is an active sensor configured to send a first electromagnetic wave towards a target and receive a second electromagnetic wave, the second electromagnetic wave being reflected off the target.
6. The method according to any one of the preceding items, wherein the second sensor is an active sensor configured to send a first electromagnetic wave towards a target and receive a second electromagnetic wave, the second electromagnetic wave being reflected of the target.
7. The method according to any one of the preceding items, wherein the first sensor and the second sensors are selected from the group comprising a LIDAR sensor, a radar sensor, a sonar sensor and a stereo camera.
8. The method according to any one of the preceding items, wherein the first sensor is arranged on an undercarriage of the vehicle.
9. The method (100) according to any one of the preceding items, wherein the vehicle is an autonomous or semi-autonomous road vehicle.
10. The method (100) according to any one of the preceding items, wherein the first sensor has a 360 degree observable space.
11. The method (100) according to any one of the preceding items, wherein the first sensor has an at least partly overlapping observable space with a plurality of sensors of the vehicle.
12. A non-transitory computer-readable storage medium storing one or more programs configured to be executed by one or more processors of a vehicle control system, the one or more programs comprising instructions for performing the method according to item 1.
13. A vehicle control device comprising:
   at least one processor;
   at least one memory;
   at least one sensor interface;
   at least one communication interface;
   wherein the at least one processor is configured to execute instructions stored in the memory to perform a method for performing a sensor verification for a vehicle comprising a first sensor and a second sensor, wherein a first sensor coordinate system of the first sensor and a second sensor coordinate system of the second sensor are related to a vehicle coordinate system, and wherein the first sensor and the second sensor have an at least partly overlapping observable space, wherein the at least one processor is configured to:
      determine a first position of an external object located in the at least partly overlapping observable space by receiving a first signal indicative of the first position from the first sensor;
      determine a second position of the external object by receiving a second signal indicative of the second position from the second sensor;
      compare the determined first position and the determined second position in relation to any one of the first sensor coordinate system, second sensor coordinate system or vehicle coordinate system in order to form a first comparison value;
      determine a reference position of at least one reference feature by receiving a reference signal indicative of the reference position from the first sensor, wherein each reference feature is arranged at a predefined position on the vehicle in an observable space of the first sensor;
      compare each determined reference position with the predefined position in order to form at least one verification comparison value;
      send an output signal indicative of an operational status of the second sensor based on at least one of the first comparison value and the verification comparison value, and further based on at least one predefined difference threshold value.
14. A vehicle comprising:
   a first sensor for detecting position of an external object relative to the first sensor;
   a second sensor for detecting a position of the external object relative to the second sensor, wherein the first sensor and the second sensor have an at least partly overlapping observable space;
   at least one reference feature arranged on the vehicle at a predefined position relative to the first sensor, each reference feature being further arranged in an observable space of the first sensor; and
   a vehicle control device according to item 13.
15. The vehicle according to item 14, wherein the first sensor and the at least one reference feature are arranged on an undercarriage of the vehicle.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent embodiments should be apparent for the person skilled in the art

## Claims

1. A method (100) for performing a sensor verification for a vehicle comprising a first sensor and a second sensor, wherein a first sensor coordinate system of the first sensor and a second sensor coordinate system of the second sensor are related to a vehicle coordinate system, and wherein the first sensor and the second sensor have an at least partly overlapping observable space, the method comprising:
determining (101) a first position of an external object located in the at least partly overlapping observable space by means of the first sensor of the vehicle;
determining (102) a second position of the external object by means of the second sensor of the vehicle,
comparing (103) the determined first position and the determined second position in relation to any one of the first sensor coordinate system, second sensor coordinate system or vehicle coordinate system in order to form a first comparison value;
determining (104) a reference position of at least one reference feature by means of the first sensor, wherein each reference feature is arranged on the vehicle at a predefined position relative to the first sensor, each reference feature being further arranged in an observable space of the first sensor;
comparing (105) each determined reference position with each corresponding predefined position in order to form at least one verification comparison value;
generating (106) an output signal indicative of an operational status of the second sensor based on at least one of the first comparison value and the verification comparison value, and further based on at least one predefined threshold value.

2. The method (100) according to claim 1, wherein the step of comparing (103) the determined first position and the determined second position comprises determining (111) a confirmation position of the external object by transforming the determined second position to the first sensor coordinate system;
reconfiguring (112) the first sensor based on a comparison between the first position and the determined confirmation position such that the external object appears to be in the confirmation position for the first sensor;
wherein the step of determining the reference position comprises determining (104') the reference position of at least one reference feature by means of the reconfigured first sensor;
wherein the step of generating (106) an output signal indicative of an operational status of the second sensor is based on the at least one verification comparison value and a maximum threshold value between the determined reference position and the predefined position.

3. The method (100) according to claim 1, wherein the step of comparing (105) each determined reference position with each corresponding predefined position in order to form at least one verification comparison value comprises verifying (113) an operational status of the first sensor based on the at least one verification comparison value and a maximum threshold value between the determined reference position and the predefined position;
wherein the step of determining the first position of the external object comprises determining (101') the first position of the external object by means of the verified first sensor;
wherein the step of generating (106) an output signal is based on the first comparison value and a maximum threshold difference between the first position and the second position.

4. The method (100) according to claim 1, wherein the step of determining (104) a reference position of at least one reference feature by means of the first sensor comprises determining a reference position for a plurality of reference features by means of the first sensor, the method further comprising:
calibrating (114) the first sensor based on the at least one verification comparison value;
wherein the step of determining the first position of the external object comprises determining (101") the first position of the external object by means of the calibrated first sensor; and
wherein the step of generating (106) an output signal is based on the first comparison value and a maximum threshold difference between the first position and the second position.

5. The method (100) according to any one of the preceding claims, wherein the first sensor is an active sensor configured to send a first electromagnetic wave towards a target and receive a second electromagnetic wave, the second electromagnetic wave being reflected off the target.

6. The method (100) according to any one of the preceding claims, wherein the second sensor is an active sensor configured to send a first electromagnetic wave towards a target and receive a second electromagnetic wave, the second electromagnetic wave being reflected of the target.

7. The method (100) according to any one of the preceding claims, wherein the first sensor and the second sensors are selected from the group comprising a LIDAR sensor, a radar sensor, a sonar sensor and a stereo camera.

8. The method (100) according to any one of the preceding claims, wherein the first sensor is arranged on an undercarriage of the vehicle.

9. The method (100) according to any one of the preceding claims, wherein the vehicle is an autonomous or semi-autonomous road vehicle.

10. The method (100) according to any one of the preceding claims, wherein the first sensor has a 360 degree observable space.

11. The method (100) according to any one of the preceding claims, wherein the first sensor has an at least partly overlapping observable space with a plurality of sensors of the vehicle.

12. A non-transitory computer-readable storage medium storing one or more programs configured to be executed by one or more processors of a vehicle control system, the one or more programs comprising instructions for performing the method (100) according to any one of the preceding claims.

13. A vehicle control device comprising (10) at least one processor (11) configured to execute instructions stored in the memory to perform a method for performing a sensor verification for a vehicle (1) comprising a first sensor (2) and a second sensor (3), wherein a first sensor coordinate system of the first sensor and a second sensor coordinate system of the second sensor are related to a vehicle coordinate system, and wherein the first sensor and the second sensor have an at least partly overlapping observable space, wherein the at least one processor is configured to:
determine a first position of an external object (9) located in the at least partly overlapping observable space by receiving a first signal indicative of the first position from the first sensor;
determine a second position of the external object (9) by receiving a second signal indicative of the second position from the second sensor;
compare the determined first position and the determined second position in relation to any one of the first sensor coordinate system, second sensor coordinate system or vehicle coordinate system in order to form a first comparison value;
determine a reference position of at least one reference feature (6) by receiving a reference signal indicative of the reference position from the first sensor, wherein each reference feature is arranged at a predefined position on the vehicle in an observable space of the first sensor;
compare each determined reference position with the predefined position in order to form at least one verification comparison value;
send an output signal indicative of an operational status of the second sensor based on at least one of the first comparison value and the verification comparison value, and further based on at least one predefined difference threshold value.

14. A vehicle (1) comprising:
a first sensor (2) for detecting position of an external object (9) relative to the first sensor;
a second sensor (3) for detecting a position of the external object (9) relative to the second sensor, wherein the first sensor and the second sensor have an at least partly overlapping observable space;
at least one reference feature (6) arranged on the vehicle at a predefined position relative to the first sensor, each reference feature being further arranged in an observable space of the first sensor; and
a vehicle control device (10) according to claim 13.

15. The vehicle (1) according to claim 14, wherein the first sensor (2) and the at least one reference feature (6) are arranged on an undercarriage of the vehicle.
